# EUROPÄISCHE PATENTSCHRIFT

(11) **EP 1 839 732 B1**
(45) Veröffentlichungstag und Bekanntmachung des Hinweises auf die Patenterteilung: **20.05.2009**
(21) Anmeldenummer: 06405127.9
(22) Anmeldetag: 27.03.2006
(51) Int. Cl.: B01F 9/22, B01F 9/00, A61C 9/00

(54) **Rührgerät aufweisend einen Schwingungsdämpfer**
Mixing device comprising a vibration damper
Dispositif d'agitation, comprenant un amortisseur de vibrations

(43) Veröffentlichungstag der Anmeldung: 03.10.2007
(73) Patentinhaber: Mikrona Technologie AG, 8957 Spreitenbach (CH)
(72) Erfinder: Huber, Felix, 5300 Vogelsang b. Turgi (CH)
(74) Vertreter: Wagner, Wolfgang Heribert

(56) Entgegenhaltungen:
- EP-A- 0 207 335
- EP-A- 0 599 783
- DE-U1-1202005 000 79
- DE-U1-4202005 007 64
- DE-U1-5202005 007 64
- DE-U1-6202005 013 82
- PATENT ABSTRACTS OF JAPAN Bd. 2000, Nr. 13, 5. Februar 2001 (2001-02-05) -& JP 2000 271465 A (THINKY:KK), 3. Oktober 2000 (2000-10-03)

## Beschreibung

### Technisches Gebiet

Die Erfindung betrifft ein Rührgerät gemäss dem Oberbegriff des Anspruchs 1. Derartige Geräte werden in zur Herstellung homogener Massen eingesetzt wie sie z.B. in der Medizinaltechnik, insbesondere in der Dentaltechnik benötigt werden. Ein bevorzugtes Einsatzgebiet ist die Produktion von homogenen und blasenfreien Abdruckmassen für die Herstellung von Abdrücken von Gebissen und Gebissteilen, welche dann als Grundlage für die Herstellung von Prothesen dienen, doch sind auch andere Anwendungen innerhalb und ausserhalb der Medizinaltechnik möglich.

### Stand der Technik

Aus DE 20 2005 007 645 U1 ist ein gattungsgemässes Rührgerät bekannt, bei welchem an einem zur Abstützung auf einer ebenen Abstellfläche geeigneten Gestell eine Rührvorrichtung gefedert aufgehängt ist. Sie ist als Rühreinheit ausgebildet mit einer Halterung, an der der Träger gelagert ist und in der der Motor angeordnet ist. Die federnde Aufhängung hat den Zweck, die durch die doppelte Drehbewegung verursachten Schwingungen der Rühreinheit aufzufangen und zu verhindern, dass sie sich auf das Gestell übertragen und das Rührgerät auf der Abstellfläche zu wandern beginnt. Dies gelingt jedoch nur dann, wenn die Halterung eine grosse Masse aufweist, welche die Schwingungen dämpft und dafür sorgt, dass ihre Amplitude gering bleibt.

Aus diesem Grund ist das Gesamtgewicht der Rühreinheit verhältnismässig gross. Wenn dieselbe zu Reparatur- oder Wartungszwecken versandt oder sonst transportiert werden muss, verursacht dies verhältnismässig grossen Aufwand und entsprechend hohe Kosten.

### Darstellung der Erfindung

Der Erfindung liegt die Aufgabe zu Grunde, ein Rührgerät anzugeben, welches bei guten Dämpfungseigenschaften eine Rühreinheit mit geringem Transportgewicht aufweist. Diese Aufgabe wird durch die Merkmale im Kennzeichen des Anspruchs 1 gelöst.

Beim erfindungsgemässen Rührgerät umfasst die Rührvorrichtung ein Dämpfungsteil, das einen wesentlichen Teil ihres Gewichts ausmacht, während die Rühreinheit, die gelegentlich gewartet oder repariert werden muss, verhältnismässig leicht und klein und ohne Schwierigkeit vom übrigen Gerät trennbar ist, sodass sie leicht ausgebaut und versandt werden kann. Dies bedeutet meist eine beträchtliche Kosteneinsparung.

Ein ähnliches Rührgerät ist aus JP 2000 271 465 A bekannt. Dort trägt eine federnd an einem Gestell aufgehängte plattenförmige Halterung an der Unterseite einen zentralen Motor, der einen oberhalb der Halterung angeordneten um eine zentrale Achse drehbaren Träger antreibt, welcher einen mittels Riemenantrieb antreibbaren drehbaren Becher trägt. Neben dem Motor ist an der Unterseite der Halterung ausserdem eine Umschaltvorrichtung angebracht, mittels welcher zwecks Umstellung der Drehzahl des Bechers der Riemenantrieb beeinflusst werden kann. Der Umschaltvorrichtung gegenüber ist ein Ausgleichsgewicht ebenfalls an der Unterseite der Halterung angebracht, das offenbar den Einfluss der Umschaltvorrichtung auf die Lage des Schwerpunkts des federnd aufgehängten Teils des Rührgerätes, das aus der Halterung und den an ihr befestigten Komponenten besteht, kompensieren soll. Die Art der Befestigung des Ausgleichsgewichts an der Halterung ist nicht ersichtlich.

### Kurze Beschreibung der Zeichnungen

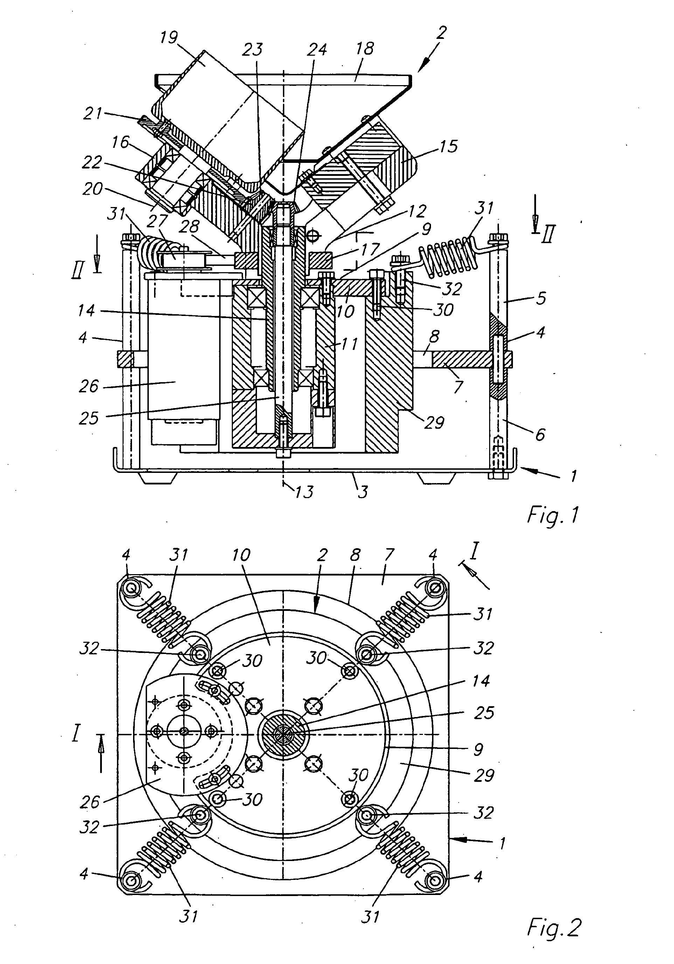

Im folgenden wird die Erfindung anhand von Figuren, welche lediglich ein Ausführungsbeispiel darstellen, näher erläutert. Es zeigen
- Fig. 1: einen vertikalen Schnitt durch ein erfindungsgemässes Rührgerät, längs I-I in Fig. 2,
- Fig. 2: einen horizontalen Schnitt durch das erfindungsgemässe Rührgerät längs II-II in Fig. 1 und
- Fig. 3: eine Darstellung ähnlich Fig. 1, wobei die Rühreinheit vom verbleibenden Teil des Rührgeräts abgehoben ist.

### Wege zur Ausführung der Erfindung

Das als Tischgerät ausgebildete Rührgerät weist ein Gestell 1 auf, an dem eine Rührvorrichtung mit einer Rühreinheit 2 federnd aufgehängt ist. Das Gestell 1 umfasst eine ungefähr quadratische waagrechte Bodenplatte 3 aus festem Stahlblech mit vier angeformten Füssen, auf denen es auf einer ebenen Abstellfläche, die gewöhnlich von der Platte eines Arbeitstisches o.dgl. gebildet wird, sicher steht. An den Ecken der Bodenplatte 3 sind vier senkrecht nach oben ragende Säulen 4 mittels Schrauben befestigt, welche jeweils aus einem oberen Abschnitt 5 und einem unteren Abschnitt 6 bestehen, zwischen denen eine mit der Bodenplatte 3 ungefähr kongruente, ebenfalls waagrechte Stützplatte 7 geklemmt ist. Der untere Abschnitt 5 und der obere Abschnitt 6 sind jeweils mittels eines Bolzens, der durch ein Loch in der Stützplatte 7 ragt, verbunden. Die Stützplatte 7 weist mittig eine grosse runde Oeffnung 8 auf, deren Rand die Rühreinheit 2 mit Abstand umgibt.

Die Rühreinheit 2 umfasst eine Halterung 9 mit einer ungefähr scheibenförmigen Deckplatte 10, an deren Unterseite zentral ein zylindrisches Gehäuse 11 angebracht ist. Ein Träger 12 weist eine im Gehäuse 11 um eine senkrechte zentrale Hauptachse 13 drehbar gelagerte Hohlwelle 14 auf, welche durch eine Durchführung in der Deckplatte 10 ragt.

Sie trägt oberhalb derselben ein Stützteil mit zwei nach oben schräg auseinanderlaufenden Armen 15, 16. Am unteren Ende des Stützteils, knapp oberhalb der Deckplatte 10, ist eine zur Hohlwelle 14 koaxiale Riemenscheibe 17 angebracht. Der erste Arm 15 trägt ein zur Hohlwelle 14 koaxiales konisches Gefäss 18, während der zweite Arm 16 an der Oberseite einen zylindrischen Becher 19 trägt, der durch eine Oeffnung in das Gefäss 18 ragt.

Der Becher 19 ist um eine Drehachse 20 drehbar am Arm 16 gelagert, welche gegen die Hauptachse 13 geneigt ist und diese etwas oberhalb des Gefässes 18 schneidet. Unmittelbar unterhalb des Bechers 19 ist ein mit demselben koaxiales und drehfest verbundenes Zahnrad 21 angebracht, dessen Verzahnung mit einem Zahnrad 22 eingreift, welches einstückig mit einem Kegelzahnrads 23 ist, wobei die gemeinsame Achse am Arm 16 drehbar gelagert ist. Das Kegelzahnrad 23 greift mit einem weiteren Kegelzahnrad 24 ein, das am oberen Ende einer am Grund des Gehäuses 11 unverdrehbar verankerten, von der Hohlwelle 14 koaxial umgebenen Stange 25 befestigt ist.

Ein Motor 26 - ein Elektromotor - ist in einer Ausnehmung am Rand der Deckplatte 10 gehaltert und mit ihr verschraubt und weist eine auf der Höhe der Riemenscheibe 17 angebrachte Abtriebsscheibe 27 auf, die durch einen geschlossenen Treibriemen 28 mit der Riemenscheibe 17 verbunden ist.

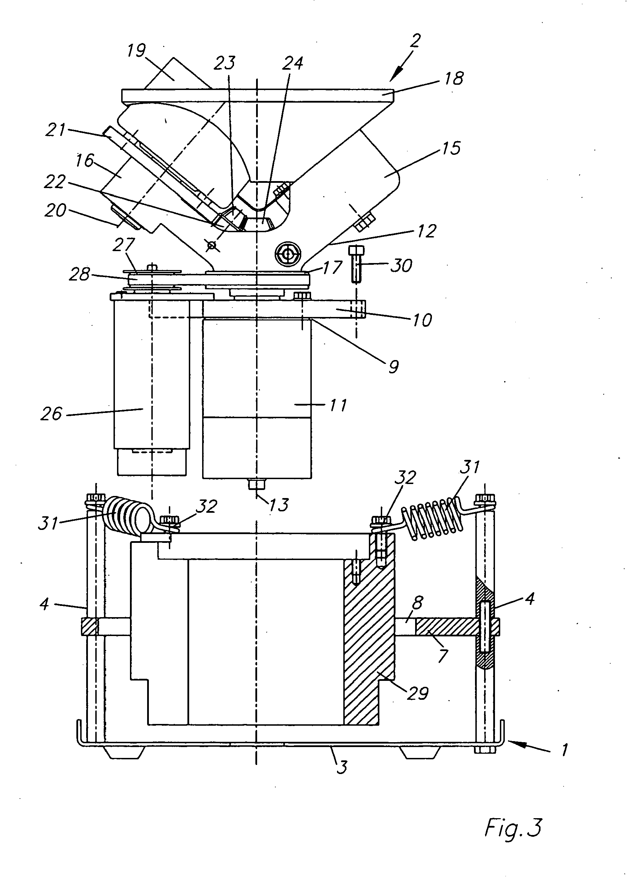

Die federnd am Gestell aufgehängte Rührvorrichtung umfasst neben der Rühreinheit 2 ein Dämpfungsteil 29, das als massiver Stutzen aus z.B. Stahl ausgebildet ist und das Gehäuse 11 mit Abstand ringartig umgibt, wobei zur Aufnahme des Motors 26 eine Unterbrechung vorgesehen ist. An der Oberseite weist das Dämpfungsteil 29 ein innen umlaufendes Sims auf, auf dem der Rand der Deckplatte 10 aufliegt. Mittels vier durch Löcher im Randbereich der Deckplatte 10 ragender Schraubenbolzen 30 ist die Deckplatte 10 mit dem Dämpfungsteil 29 starr verbunden. Die Verbindung ist zuverlässig, kann aber von der Oberseite der Deckplatte 10 her leicht mittels eines Schraubenschlüssels gelöst werden, worauf die Rühreinheit 2 vom Dämpfungsteil 29 abgehoben werden kann (Fig. 3), da die übrigen Teile derselben nur über die Deckplatte 10 mit ihm verbunden sind.

Das Dämpfungsteil 29 ist durch vier Schraubenfedern 31 mit dem Gestell 1 verbunden. Jede der Schraubenfedern 31 ist am oberen Ende einer der Säulen 4 verankert und greift an einem Bolzen 32 an, der nahe der der jeweiligen Säule 4 zunächstliegenden Ecke an der Oberseite des Dämpfungsteils 29 verankert ist. Die Schraubenfedern 31 bilden also eine federnde Aufhängung der Rührvorrichtung mit der Rühreinheit 2 und dem Dämpfungsteil 29 am Gestell 1, welche einzig am Dämpfungsteil 29 angreift, sodass ein Lösen der Verbindung zwischen demselben und der Rühreinheit 2 und Abheben der letzteren die Verbindung der Rührvorrichtung mit dem Gestell 1 nicht tangiert.

Es ist günstig, wenn die Masse des Dämpfungsteils 29 einen verhältnismässig grossen Anteil an der Masse der Rührvorrichtung hat, im allgemeinen wird er mindestens 50%, vorzugsweise etwa 60% bis 70% davon betragen, sodass eine hohe Dämpfung bei verhältnismässig geringem Gewicht der Rühreinheit 2 mit der Halterung 9, dem Träger 12 und dem Motor 26 erzielt wird. Beispielsweise kann die Gesamtmasse der Rührvorrichtung 9,5kg betragen und die Masse des Dämpfungsteils 29 davon 6,7kg ausmachen. Die Auslegung der Schraubenfedern 31 ist auf die Gesamtmasse der Rührvorrichtung und die auftretenden Frequenzen so abgestimmt, dass die Amplituden der Schwingungen derselben klein sind und keine Resonanzen auftreten. Ihre Federkonstante kann jeweils etwa zwischen 7 und 10N/mm liegen und z.B. ca. 8,1N/mm betragen.

Die Verbindung zwischen der Rühreinheit und dem Dämpfungsteil sollte starr und auch unter den auftretenden Vibrationen zuverlässig sein, aber sich auch leicht lösen lassen. Neben einer wie beschrieben oder auch auf andere Weise ausgeführten Verschraubung kommt auch eine Klemmverbindung, Schnappverbindung o.ä. in Frage.

Im Betrieb wird die zu rührende Masse, z.B. eine Abdruckmasse, wie sie in Dentallabors hergestellt und für die Herstellung von Abdrücken von Gebissen und Gebissteilen, welche dann als Grundlage für die Herstellung von Prothesen dienen, eingesetzt werden, in den Becher 19 gefüllt und der Motor 26 eingeschaltet, der über den Treibriemen 28 den Träger 12 in Drehung versetzt. Durch die Wirkverbindung des Zahnrads 21 mit dem feststehenden Kegelzahnrad 24 wird der Becher 19, während er um die Hauptachse 13 kreist, zugleich um die Drehachse 20 gedreht. Dabei kann der Träger 12 z.B. mit 2'800U/min rotieren und der Becher 19 gegenüber dem Träger 12 mit 300U/min.

### Bezugszeichenliste

- 1: Gestell
- 2: Rühreinheit
- 3: Bodenplatte
- 4: Säule
- 5: unterer Abschnitt
- 6: oberer Abschnitt
- 7: Stützplatte
- 8: Oeffnung
- 9: Halterung
- 10: Deckplatte
- 11: Gehäuse
- 12: Träger
- 13: Hauptachse
- 14: Hohlwelle
- 15, 16: Arme
- 17: Riemenscheibe
- 18: Gefäss
- 19: Becher
- 20: Drehachse
- 21: Zahnrad
- 22: Zahnrad
- 23: Kegelzahnrad
- 24: Kegelzahnrad
- 25: Stange
- 26: Motor
- 27: Abtriebsscheibe
- 28: Treibriemen
- 29: Dämpfungsteil
- 30: Schraubenbolzen
- 31: Schraubenfedern
- 32: Bolzen

## Patentansprüche

1. Rührgerät mit einem zur Abstützung auf einer ebenen Abstellfläche geeigneten Gestell (1) sowie mit einer federnd am Gestell (1) aufgehängten Rührvorrichtung, welche eine Rühreinheit (2) umfasst mit einer Halterung (9) und einem Träger (12) mit einem exzentrisch und drehbar angebrachten Becher (19) zur Aufnahme des Rührguts, der um eine Hauptachse (13) drehbar an der Halterung (9) gelagert ist sowie mit einem Motor (26) zum Antrieb des Trägers (12) und des Bechers (19), **dadurch gekennzeichnet, dass** die Rührvorrichtung ein lösbar mit der Rühreinheit (2) verbundenes Dämpfungsteil (29) zur Vergrösserung ihrer Masse umfasst.

2. Rührgerät nach Anspruch 1, **dadurch gekennzeichnet, dass** die Masse des Dämpfungsteils (29) mindestens 50%, vorzugsweise mindestens 60% der Masse der Rührvorrichtung ausmacht.

3. Rührgerät nach Anspruch 1 oder 2, **dadurch gekennzeichnet, dass** das Dämpfungsteil (29) die Rühreinheit (2) im wesentlichen ringartig umgibt.

4. Rührgerät nach einem der Ansprüche 1 bis 3, **dadurch gekennzeichnet, dass** die federnde Aufhängung der Rührvorrichtung einzig am Dämpfungsteil (29) angreift.

5. Rührgerät nach einem der Ansprüche 1 bis 4, **dadurch gekennzeichnet, dass** die Verbindung zwischen der Rühreinheit (2) und dem Dämpfungsteil (29) starr ist.

6. Rührgerät nach einem der Ansprüche 1 bis 5, **dadurch gekennzeichnet, dass** die Halterung (9) eine Deckplatte (10) umfasst sowie ein an deren Unterseite angebrachtes Gehäuse (11), in welchem eine durch eine Durchführung in der Deckplatte (10) ragende Stange (25) befestigt ist, welche an ihrem oberen Ende ein Zahnrad trägt, das zwecks Antriebs des Bechers (19) mit einer mit demselben verbundenen Verzahnung in Wirkverbindung steht, während der Träger (12) an der Unterseite eine die Stange (25) umgebend durch die Durchführung ins Gehäuse (11) ragende und dort drehbar gelagerte Hohlwelle (14) aufweist.

7. Rührgerät nach Anspruch 6, **dadurch gekennzeichnet, dass** der Träger (12) eine mit der Hohlwelle (14) koaxiale Riemenscheibe (17) umfasst, welche durch einen Treibriemen (28) mit einer Abtriebsscheibe (27) des Motors (26) verbunden ist.

8. Rührgerät nach einem der Ansprüche 1 bis 7, **dadurch gekennzeichnet, dass** der Motor (26) an der Halterung (9) befestigt ist und von der Rühreinheit (2) einzig die Halterung (9) direkt mit dem Dämpfungsteil (29) verbunden ist.

9. Rührgerät nach Anspruch 6 oder 7 und Anspruch 8, **dadurch gekennzeichnet, dass** von der Halterung (9) einzig die Deckplatte (10) direkt mit dem Dämpfungsteil (29) verbunden, vorzugsweise verschraubt ist.

10. Rührgerät nach einem der Ansprüche 1 bis 9, **dadurch gekennzeichnet, dass** das Gestell (1) eine waagrechte Stützplatte (7) umfasst mit einer Oeffnung (8), deren Rand die Rühreinheit (2) mit Abstand umgibt.

## Claims

1. Stirring device with a frame (1) which is suitable for being supported on a flat deposition surface and with a stirring device which is resiliently suspended from the frame (1) and comprises a stirring unit (2) with a mount (9) and a carrier (12) with an eccentrically and rotatably attached cup (19) for receiving the material to be stirred, which is mounted on the mount (9) so as to be able to rotate about a main axis (13) and with a motor (26) for driving the carrier (12) and the cup (19), **characterized in that** the stirring device comprises a damping part (29) which is detachably connected to the stirring unit (2) for increasing the mass of the stirring device.

2. Stirring device according to claim 1, **characterized in that** the mass of the damping part (29) makes up at least 50 %, preferably at least 60 % of the mass of the stirring device.

3. Stirring device according to claim 1 or 2, **characterized in that** the damping part (29) surrounds the stirring unit (2) in a substantially annular manner.

4. Stirring device according to one of claims 1 to 3, **characterized in that** the resilient suspension of the stirring device attaches only to the damping part (29).

5. Stirring device according to one of claims 1 to 4, **characterized in that** the connection between the stirring unit (2) and the damping part (29) is rigid.

6. Stirring device according to one of claims 1 to 5, **characterized in that** the mount (9) comprises a cover plate (10) and also a housing (11) which is attached to the underside thereof and in which there is fastened a rod (25) which protrudes through a duct in the cover plate (10) and carries at its upper end a gear wheel which, for the purpose of driving the cup (19), is operatively connected to toothing connected to said cup, while the carrier (12) has on the underside a hollow shaft (14) which, surrounding the rod (25), protrudes through the duct into the housing (11) and is rotatably mounted there.

7. Stirring device according to claim 6, **characterized in that** the carrier (12) comprises a belt pulley (17) which is coaxial with the hollow shaft (14) and is connected to a driven pulley (27) of the motor (26) by a driving belt (28).

8. Stirring device according to one of claims 1 to 7, **characterized in that** the motor (26) is fastened to the mount (9) and, of the stirring unit (2), only the mount (9) is connected directly to the damping part (29).

9. Stirring device according to claim 6 or 7 and claim 8, **characterized in that,** of the mount (9), only the cover plate (10) is connected, preferably screwed, directly to the damping part (29).

10. Stirring device according to one of claims 1 to 9, **characterized in that** the frame (1) comprises a horizontal support plate (7) with an opening (8), the edge of which surrounds the stirring unit (2) at a distance.

## Revendications

1. Dispositif d'agitation comportant un bâti (1) apte à s'appuyer sur une surface de pose plane, ainsi qu'un dispositif de mélange suspendu de manière élastique au bâti (1) et comprenant une unité de mélange (2) avec une fixation (9) et un support (12) avec un bol (19) destiné à recevoir le produit à mélanger, disposé de manière excentrique et de manière à pouvoir tourner, qui est monté sur la fixation (9) de manière à pouvoir tourner autour d'un axe principal (13), ainsi qu'avec un moteur (26) destiné à entraîner le support (12) et le bol (19), **caractérisé en ce que** le dispositif de mélange comprend une pièce d'amortissement (29) destinée à augmenter sa masse, reliée de manière séparable à l'unité de mélange (2).

2. Dispositif d'agitation selon la revendication 1, **caractérisé en ce que** la masse de la pièce d'amortissement (29) représente au moins 50 %, de préférence au moins 60 % de la masse du dispositif de mélange.

3. Dispositif d'agitation selon la revendication 1 ou 2, **caractérisé en ce que** la pièce d'amortissement (29) entoure l'unité de mélange (2) essentiellement à la manière d'un anneau.

4. Dispositif d'agitation selon l'une des revendications 1 à 3, **caractérisé en ce que** la suspension élastique du dispositif de mélange est fixée uniquement sur la pièce d'amortissement (29).

5. Dispositif d'agitation selon l'une des revendications 1 à 4, **caractérisé en ce que** la liaison entre l'unité de mélange (2) et la pièce d'amortissement (29) est fixe.

6. Dispositif d'agitation selon l'une des revendications 1 à 5, **caractérisé en ce que** la fixation (9) comprend une plaque de recouvrement (10) ainsi qu'un boîtier (11) disposé sur la face inférieure de celle-ci, dans lequel est fixée une tige (25) traversant un passage dans la plaque de recouvrement (10), ladite tige portant à son extrémité supérieure une roue dentée qui est en liaison active avec une denture reliée au bol (19) afin d'entraîner celui-ci, tandis que le support (12) présente sur la face inférieure un arbre creux (14) pénétrant dans le boîtier (11) à travers le passage en entourant la tige (25) et monté à cet endroit de manière à pouvoir tourner.

7. Dispositif d'agitation selon la revendication 6, **caractérisé en ce que** le support (12) comprend une poulie à courroie (17) coaxiale à l'arbre creux (14), qui est reliée à une poulie réceptrice (27) du moteur (26) par une courroie de commande (28).

8. Dispositif d'agitation selon l'une des revendications 1 à 7, **caractérisé en ce que** le moteur (26) est fixé sur la fixation (9) et, de l'unité de mélange (2), seule la fixation (9) est reliée directement à la pièce d'amortissement (29).

9. Dispositif d'agitation selon la revendication 6 ou 7 et la revendication 8, **caractérisé en ce que**, de la fixation (9), seule la plaque de recouvrement (10) est reliée directement à la pièce d'amortissement (29), de préférence vissée.

10. Dispositif d'agitation selon l'une des revendications 1 à 9, **caractérisé en ce que** le bâti (1) comprend une plaque d'appui (7) horizontale avec une ouverture (8) dont le bord entoure à distance l'unité de mélange (2).
